# EUROPEAN PATENT APPLICATION

(11) **EP 4 744 893 A1**
(43) Date of publication of application: **20.05.2026**
(21) Application number: 24839574.1
(22) Date of filing: 01.07.2024
(51) Int. Cl.: B32B 27/30, B32B 27/12, D06N 3/06

(54) **LAMINATE AND SYNTHETIC LEATHER COMPRISING SAME**

(30) Priority: 10.07.2023 JP 2023112743; 08.12.2023 JP 2023207443
(71) Applicant: Tosoh Corporation, Yamaguchi 746-8501 (JP)
(72) Inventor: YAHAGI Yuta, Yokkaichi-shi, Mie 510-8540 (JP); WATANABE Kazunori, Yokkaichi-shi, Mie 510-8540 (JP); BINGO Shota, Yokkaichi-shi, Mie 510-8540 (JP); ISODA Shigeki, Yokkaichi-shi, Mie 510-8540 (JP)
(74) Representative: Novagraaf International SA
(86) International application number: PCT/JP2024/023787
(87) International publication number: WO 2025/013682

(57) **Abstract**

Provided are a laminate in which respective layers are made of vinyl chloride resins to realize monomaterialization and thereby achieve excellent recyclability, particularly excellent material recyclability, and synthetic leather including the laminate.

The laminate has at least an adhesive layer between a skin layer and a fabric substrate and may preferably has a foam layer between the skin layer and the adhesive layer, wherein the skin layer, the adhesive layer, the fabric substrate and preferably the foam layer are made of vinyl chloride resins. The synthetic leather includes such a laminate.

## Description

### TECHNICAL FIELD

The present invention relates to a laminate and synthetic leather including the laminate. More particularly, the present invention relates to a laminate having at least an adhesive layer at least between a skin layer and a fabric substrate and synthetic leather including the laminate, in which vinyl chloride resins are used as constituent materials of the respective layers to realize monomaterialization and thereby achieve excellent material recyclability.

### BACKGROUND ART

Synthetic leather has a fabric substrate and a skin layer laminated on a surface of the fabric substrate. The skin layer is made of a base resin, examples of which are a vinyl chloride resin, a urethane resin and the like. Synthetic leather using a urethane resin is advantageous in terms of excellent flex resistance, but is more expensive than that using a vinyl chloride resin. On the other hand, vinyl chloride resins are advantageous in terms of water resistance and ease of processing. Thus, synthetic leather having a skin layer made using a vinyl chloride resin as a base resin has been proposed for applications in a wide range of fields including automotive interiors, furniture, bags and pouches, footwear, clothing, stationery and the like. Furthermore, various fabric substrates for synthetic leather, such as those formed from cotton fibers, polyester fibers, nylon fibers, rayon fibers and the like, have been proposed (see, for example, Patent Document 1).

As to synthetic leather using a vinyl chloride resin, there are the following proposals: synthetic leather with excellent cold resistance and chemical resistance, which has a skin layer containing a vinyl chloride resin and a polyester plasticizer with a number-average molecular weight of from 800 to 4,000 (see e.g. Patent Document 2); synthetic leather with excellent abrasion resistance and anti-wrinkling properties, which is made of a laminate having a foam layer containing a vinyl chloride resin and a plasticizer and a resin layer containing a polyurethane (see e.g. Patent Document 3); and synthetic leather with light weight and excellent abrasion resistance, which has a foam layer containing a vinyl chloride resin and a thermoplastic polyurethane elastomer (see e.g. Patent Document 4). As to a fabric substrate for synthetic leather, there is proposed a fabric substrate with excellent durability and flame retardancy, which is formed from yarns containing flame retardant fibers with a limiting oxygen index of 25 or higher and cellulose-based fibers (see e.g. Patent Document 5).

### PRIOR ART DOCUMENTS

### PATENT DOCUMENTS

Patent Document 1: JP-A-H9-228258
Patent Document 2: JP-A-2022-13701
Patent Document 3: JP-A-2017-210703
Patent Document 4: JP-A-2020-180191
Patent Document 5: JP-A-2013-72141

### DISCLOSURE OF INVENTION

### TECHNICAL PROBLEM

In the proposals of Patent Documents 1 to 5, however, the skin layer and the fabric substrate are made of different materials and cannot undergo material recycling as they remain bonded together. These proposals are thus unsuitable for material recycling due to the need for processes of peeling and separation etc.

It is accordingly an object of the present invention to provide a laminate with excellent material recyclability and synthetic leather including the laminate.

The improvement of recyclability by monomaterialization using vinyl chloride resins as constituent materials leads to advancement of inclusive and sustainable industrialization, contributing to sustainable societies as recently advocated for in the SDGs.

### SOLUTION TO PROBLEM

As a result of extensive studies made on the above problem, the present inventors have found that a laminate and synthetic leather achieve excellent material recyclability by monomaterialization of their respective layer materials.

That is, the present invention includes the following aspects [1] to [9].
[1] A laminate comprising a skin layer, a fabric substrate and at least an adhesive layer between the skin layer and the fabric substrate, wherein each of the skin layer, the adhesive layer and the fabric substrate is made of a vinyl chloride resin.
[2] The laminate according to [1], comprising at least a foam layer between the skin layer and the adhesive layer, wherein the foam layer is made of a vinyl chloride resin.
[3] The laminate according to [1] or [2], wherein the skin layer and the adhesive layer are respectively made of vinyl chloride resins for paste processing.
[4] The laminate according to any one of [1] to [3], wherein the fabric substrate is a woven fabric made of a vinyl chloride resin.
[5] The laminate according to any one of [1] to [4], wherein each of the skin layer and the adhesive layer contains at least 40 to 100 parts by weight of a plasticizer and 1 to 5 parts by weight of a stabilizer per 100 parts by weight of the vinyl chloride resin.
[6] The laminate according to any one of [1] to [5], wherein each of the skin layer and the adhesive layer is made of a vinyl chloride resin having a polymerization degree of 700 to 5,000.
[7] The laminate according to any one of [1] to [6], wherein the adhesive layer is made of a vinyl chloride-vinyl acetate copolymer resin.
[8] A synthetic leather comprising the laminate as defined in any one of [1] to [7].
[9] A method for producing the laminate as defined in any one of [1] to [7], comprising: applying a polyvinyl chloride paste sol as the adhesive layer between the fabric substrate made of a vinyl chloride resin and the skin layer made of a vinyl chloride resin or between the fabric substrate made of a vinyl chloride resin and the foam layer made of a vinyl chloride resin; and heat-bonding the fabric layer, the adhesive layer and the skin layer, or the fabric substrate, the adhesive layer and the foam layer, at 50°C to 230°C to form a laminate.

### ADVANTAGEOUS EFFECTS OF INVENTION

The laminate of the present invention and synthetic leather obtained therefrom are excellent in recyclability, particularly in material recyclability, and are expected to find applications in a wide range of fields including automotive interiors, furniture, bags and pouches, footwear, clothing, stationery and the like.

### DESCRIPTION OF EMBODIMENTS

Hereinafter, the present invention will be described in detail below.

The laminate of the present invention has a skin layer, a fabric substrate and at least an adhesive layer between the skin layer and the fabric substrate. For example, the laminate can be embodied as a laminate having at least a skin layer, an adhesive layer and a fabric substrate laminated in this order and may have an additional layer for imparting a function. Here, each of the skin layer, the adhesive layer and the fabric substrate constituting the laminate is made of a vinyl chloride resin. A foam layer may be laminated between the skin layer and the adhesive layer to achieve excellent touch and design property. In this case, it is preferable that the foam layer is also made of a vinyl chloride resin.

From the viewpoint of recycling, the synthetic resins used for the skin layer, the foam layer and the adhesive layer are preferably thermoplastic polyvinyl chlorides. The fabric substrate may be a knitted, woven or non-woven fabric made of polyvinyl chloride fibers.

The skin layer constituting the laminate of the present invention is made of a vinyl chloride resin. With a view to achieving good quality without causing quality and hygiene problems such as bleed-out, the skin layer preferably contains a plasticizer in an amount of 40 to 100 parts by weight, more preferably 50 to 90 parts by weight, still more preferably 50 to 80 parts by weight, per 100 parts by weight of the vinyl chloride resin.

The vinyl chloride resin can be any type that falls within the category of vinyl chloride resins. Examples of the vinyl chloride resin include: vinyl chloride homopolymer resins; and vinyl chloride copolymer resins obtained by copolymerization of vinyl chloride with vinyl acetate, acrylic ester, methacrylic ester, styrene, ethylene or the like. The vinyl chloride resin may be either a suspension-polymerized vinyl chloride resin or a vinyl chloride resin for paste processing (hereinafter sometimes referred to as "paste PVC"), and may be a commercially available product. As examples of commercially available suspension-polymerized vinyl chloride resin products, there may be mentioned: TH, TE and TG Series (product name) (manufactured by Taiyo Vinyl Corporation); KANEVINYL (product name) (manufactured by Kaneka Corporation); ZEST (product name) (manufactured by Shin Daiichi Enbi Co., Ltd.); and the like. As examples of commercially available paste PVC products, there may be mentioned: Ryuron Paste (product name) (manufactured by Tosoh Corporation); KANEVINYL Paste (manufactured by Kaneka Corporation); ZEST (product name) P Series (manufactured by Shin Daiichi Enbi Co., Ltd.); and the like. Preferred is paste PVC that can be easily processed into a PVC paste sol when used for the skin layer.

The polymerization degree of the vinyl chloride resin is preferably 700 to 5,000, more preferably 1,000 to 4,000, still more preferably 1,500 to 3,000, with a view to imparting excellent abrasion resistance to the skin layer.

The plasticizer may be the one generally known as a plasticizer for polyvinyl chlorides and, for example, is preferably at least one type selected from the group consisting of: phthalates such as di(2-ethylhexyl) phthalate, diisononyl phthalate (hereinafter sometimes abbreviated as DINP), diisodecyl phthalate and dibutyl phthalate; adipates such as di(2-ethylhexyl) adipate and diisononyl adipate; trimellitates such as tri(2-ethylhexyl) trimellitate, triisodecyl trimellitate and tri-n-octyl trimellitate; phosphates such as tri(2-ethylhexyl) phosphate, tricresyl phosphate and trixylyl phosphate; benzoates such as diethylene glycol dibenzoate and dipropylene glycol dibenzoate; other polyester plasticizers, sebacates, azelates, maleates and epoxidized vegetable oils.

Furthermore, the skin layer constituting the laminate of the present invention may preferably contain a stabilizer from the viewpoint of heat resistance, oxidation resistance and weather resistance. The stabilizer may be the one generally known as a stabilizer for polyvinyl chlorides. As examples of the stabilizer, a heat stabilizer, an antioxidant and a light stabilizer may be mentioned. Among others, a heat stabilizer or an antioxidant is preferred. More preferred is a heat stabilizer.

Examples of the heat stabilizer include: metal soaps such as magnesium stearate, aluminum stearate, calcium stearate, barium stearate, zinc stearate, calcium laurate, barium laurate and zinc laurate; metal salts such as sodium, zinc and barium salts of phenols and naphthols; organic tin compounds such as dibutyltin dilaurate and dibutyltin dimaleate; and phosphites such as diethyl phosphite, dibutyl phosphite, dioctyl phosphite, isodecyl diphenyl phosphite, tricresyl phosphite, triphenyl phosphite, tris(nonylphenyl) phosphite and triisooctyl phosphite.

Examples of the antioxidant include: phenol-based antioxidants such as 3,5-di-t-butyl-4-hydroxytoluene; phosphorous-based antioxidants such as triphenyl phosphite; sulfur-based antioxidants such as didodecyl thiodipropionate; and amine-based antioxidants such as N,N'-diphenyl-p-phenylenediamine.

Examples of the light stabilizer include: salicylates such as phenyl salicylate, p-tert-butylphenyl salicylate and p-octylphenyl salicylate; benzophenones such as 2,4-dihydroxybenzophenone, 2-hydroxy-4-methoxybenzophenone, 2-hydroxy-4-n-octoxybenzophenone and 2-hydroxy-4-dodecyloctoxybenzophenone; benzotriazoles such as 2(2'-hydroxy-5'-methylphenyl) benzotriazole; and cyanoacrylates such as ethyl-2-cyano-3,5-diphenylacrylate.

With a view to obtaining the laminate excellent in thermal stability and less prone to quality problems such as bleed-out, the amount of the stabilizer contained is preferably 1 to 5 parts by weight, more preferably 1 to 4 parts by weight, still more preferably 1 to 3 parts by weight, per 100 parts by weight of the paste PVC.

For the formation of the skin layer, other additives such as an inorganic filler, a viscosity modifier, a diluent, a flame retardant, a pigment and a coloring agent may be used. Examples of the inorganic filler include: calcium carbonates such as precipitated calcium carbonate, heavy calcium carbonate and ultra fine precipitated calcium carbonate; magnesium carbonate; silicates such as silica, talc, diatomite, clay and mica; aluminum hydroxide; and alumina. Examples of the viscosity modifier and of the diluent include: solvents such as xylene, solvent naphtha, mineral spirit, diisobutyl ketone and butyl acetate; and adequate surfactants. Examples of the flame retardant include antimony trioxide, red phosphorus, zinc borate, organic bromide, chlorinated paraffin and the like.

The skin layer may be formed with various patterns, such as lattice pattern, check pattern, grain pattern, diamond pattern, heart pattern, clover pattern, spade pattern, cow pattern, lizard pattern, snake pattern, crocodile pattern, tiger pattern and leopard pattern, with a view to achieving improved design property and texture when the laminate is used for synthetic leather.

The adhesive layer constituting the laminate of the present invention is made of a vinyl chloride resin as in the case of the skin layer. With a view to achieving good quality without causing quality and hygiene problems such as bleed-out, the adhesive layer preferably contains a plasticizer in an amount of 40 to 100 parts by weight, more preferably 40 to 80 parts by weight, still more preferably 40 to 70 parts by weight, per 100 parts by weight of the vinyl chloride resin. Examples of the vinyl chloride resin are the same as those described above. Among others, a vinyl chloride-vinyl acetate copolymer resin is preferred because of its particularly high low-temperature processability. Examples of the plasticizer are the same as those described above.

Further, the adhesive layer constituting the laminate of the present invention may preferably contain a stabilizer as in the case of the skin layer. The type and amount of the stabilizer contained are the same as those described for the skin layer.

With a view to achieving good adhesion of the adhesive layer, the polymerization degree of the vinyl chloride resin is preferably 700 to 5,000, more preferably 700 to 3,000, still more preferably 700 to 2,000. In the case where the adhesive layer is made of a vinyl chloride-vinyl acetate copolymer resin, the vinyl acetate content is preferably 2 to 25 wt%, more preferably 4 to 15 wt%, still more preferably 6 to 12 wt%. Examples of the stabilizer and the amount of the stabilizer contained are the same as those described above.

The fabric substrate constituting the laminate of the present invention supports the skin layer, the adhesive layer and, in some cases, the foam layer. As in the case of the skin layer and the adhesive layer, the fabric substrate is made of a vinyl chloride resin. As examples of the fabric substrate, knitted, woven and nonwoven fabrics made of polyvinyl chloride fibers may be mentioned. Among others, a knitted or woven fabric made of polyvinyl chloride fibers is preferred to provide the laminate, and synthetic leather obtained therefrom, with good balance between flexibility, flexural fatigue resistance and durability. Examples of the polyvinyl chloride fibers include POLYTERON (product name) manufactured by Teiken Limited, TOYOKALON (product name) manufactured by Denka Company Limited., and the like. Fibers of vinyl chloride-vinylidene chloride copolymers, such as those called vinylidene chloride fibers, are also usable because of high affinity with vinyl chloride resins.

Furthermore, chlorinated polyvinyl chloride fibers, i.e., fibers of chlorinated polyvinyl chlorides are also usable to achieve higher heat resistance.

The laminate of the present invention may preferably have a foam layer laminated between the skin layer and the adhesive layer to achieve excellent touch, design property and flexibility. In this case, it is preferable that the foam layer is also made of a vinyl chloride resin. In particular, with a view to achieving good quality and hygienic properties without causing bleed-out or the like, the foam layer preferably contains a plasticizer in an amount of 50 to 150 parts by weight, more preferably 70 to 130 parts by weight, still more preferably 90 to 110 parts by weight, per 100 parts by weight of the polyvinyl chloride resin. Examples of the vinyl chloride resin and the plasticizer are the same as those described above.

With a view to achieving excellent foamability of the foam layer, the polymerization degree of the vinyl chloride resin is preferably 700 to 5,000, more preferably 700 to 2,500, still more preferably 700 to 2,000. A stabilizer may also be contained, and the type and amount of the stabilizer contained are the same as those described above.

For the formation of the foam layer, a foaming agent is preferably used in an amount of 0.5 to 7 parts by weight, more preferably 2 to 6 parts by weight, still more preferably 4 to 6 parts by weight, per 100 parts by weight of the vinyl chloride resin. The foaming agent may be the one generally known as a foaming agent for polyvinyl chlorides. Examples of the foaming agent include azodicarbonamide, azobis(isobutyronitrile), benzenesulfonyl hydrazide, p-toluenesulfonyl hydrazide, p,p'-oxybis(benzenesulfonyl hydrazide), dinitrosopentamethylenetetramine, N,N'-dinitroso-N,N'-dimethylterephthalamide and trihydrazinotriamine. These foaming agents may be used alone or in combination of two or more thereof.

For the formation of the foam layer, other additives such as an inorganic filler, a viscosity modifier, a diluent, a flame retardant, a pigment and a coloring agent may be used, and examples of the other additives are the same as described above.

The foam layer may be either a closed cell foam layer or a continuous cell foam layer. With a view to providing synthetic leather with good balance between touch and durability, the foam layer is preferably a closed cell foam layer. Further, the expansion ratio of the foam layer is preferably 1.5 to 10 times, more preferably 2 to 7 times.

The laminate of the present invention is mono-materialized by making the respective layers of vinyl chloride resins and thus is excellent in material recyclability. The laminate of the present invention is also excellent in flame retardancy.

A method for producing the laminate of the present invention can be any method so far as it is capable of producing the laminate with at least the skin layer, the adhesive layer and the fabric substrate. For example, there may be mentioned: a method of bonding the skin layer, the adhesive layer, the fabric substrate and optionally the foam layer by an adhesive, thermal pressing or the like; and a method of preparing a PVC paste sol for the skin layer, a PVC paste sol for the adhesive layer and optionally a PVC paste sol for the foam layer by utilizing the properties of the paste PVC, laminating the sol layers and further laminating the fabric substrate, followed by heating to perform resinification.

In particular, in the case where the PVC paste sol is used for formation of the adhesive layer, it is preferable to apply the PVC paste sol between the fabric substrate of vinyl chloride resin and the skin layer of vinyl chloride resin or between the fabric substrate of vinyl chloride resin and the foam layer of vinyl chloride resin and heat-bonding the fabric substrate, the adhesive layer and the skin layer, or the fabric substrate, the adhesive layer and the foam layer, into a laminate at 50°C to 230°C. The heat-bonding is more preferably performed at 50 to 130°C to form the laminate.

The PVC paste sol for the skin layer, the PVC paste sol for the adhesive layer and the PVC paste sol for the foam layer can be each prepared by uniformly mixing the paste PVC with a plasticizer and optionally a foaming agent and the other ingredients by the use of, for example, a planetary mixer, a kneader, a triple roll mill, a Hobart mixer, a butterfly mixer, a dissolver, an automated mortar, a ribbon blender, a Henschel mixer or the like. The prepared sol can be formed into a layer shape by, for example, spreading and applying the sol onto a release paper by means of a doctor blade, a reverse roll coater, a natural roll coater, a floating knife coater, an air knife coater, a curtain flow coater or the like, or spraying the sol by means of a sprayer.

The laminate of the present invention is suitably usable for synthetic leather because of its excellent touch and design property. Furthermore, the laminate of the present invention is excellent in recyclability, particularly material recyclability, and thus is applicable in a wide range of fields including: automotive interiors such as seats, dashboards, instrument panels, door panels, roof panels and console boxes; furniture such as sofas, chests and cabinets; business bags, handbags and other bags and pouches; footwear such as shoes and sandals; clothing such as jackets, coats and jumpers; and stationery.

### EXAMPLES

Examples and Comparative Examples will be described below by way of laminates with fabric substrates, adhesive layers, (foam layers) and skin layers. It should however be understood that the following Examples are not intended to limit the present invention thereto.

Here, evaluation methods in Examples will be described below.

### <Evaluation of Recyclability>

The recyclability of synthetic leather obtained in Examples and Comparative Examples was evaluated by roll-kneading the synthetic leather with a kneader (8-inch test roll manufactured by Kansai Roll Co., Ltd.) at a roll temperature of 150°C, and visually inspecting the resulting kneaded material.
○: After the kneading, the kneaded material was in a uniformly mixed state.
×: After the kneading, the kneaded material was not uniform.

### <Evaluation of Flame Retardancy>

The flame retardancy of synthetic leather obtained in Examples and Comparative Examples was evaluated as follows.

A test sample of 150 mm × 20 mm × 1 mm was held horizontally close to alcohol lamp flame, with its substrate side in contact with the frame surface, to evaluate the flame retardancy based on the degree of burning of the sample.
○: The sample did not burn, or if the sample caught fire, the flames went out immediately.
×: The sample burned in flames.

### <Physical Property Evaluation of Recycled Material Sheet>

The physical properties of recycled material sheets, which were processed from synthetic leather obtained in Examples and Comparative Examples, were evaluated as follows.

A test sample of 100 mm × 25 mm × 2 mm was formed from the recycled material sheet with the use of a JIS No.3 dumbbell. Reference marks were drawn at an interval of 20 mm on a center portion of the test sample. The test sample was pulled at a rate of 200 mm/min at 23°C to measure a load applied at breaking and an elongation developed between the reference marks at breaking and determine a breaking strength and a breaking elongation.

### <Evaluation of Recycling Efficiency>

The recycling efficiency of synthetic leather obtained in Examples and Comparative Examples was evaluated as follows.

Synthetic leather was roll-kneaded with a kneader (8-inch test roll manufactured by Kansai Roll Co., Ltd.) at a roll temperature of 150°C to measure the time required to obtain the kneaded material. The measured time was converted to a daily recycling mount, based on which the recycling efficiency was evaluated. In the case of synthetic leather using a double-knit fabric ((material) PET/rayon, manufactured by Hattori Takeshi Co., Ltd.) as a fabric substrate, the double-knit fabric material was peeled off from the synthetic leather, after which the adhesive layer, (the foam layer) and the skin layer were roll-kneaded to calculate the daily recycling mount from the total time of peeling and kneading, in view of the fact that the physical properties of the kneaded material significantly deteriorate with the inclusion of the fabric substrate.

### Preparation Example 1 (Preparation of PVC Paste Sol for Skin Layer)

A PVC paste sol for skin layer was prepared by kneading 100 parts by weight of paste PVC (G50 (product name) manufactured by Tosoh Corporation; polymerization degree 1,900) with 70 parts by weight of DINP (manufactured by J-PLUS Co., Ltd.) as a plasticizer, 2 parts by weight of a Ca-Zn composite heat stabilizer (SC-320 (product name) manufactured by ADEKA Corporation) and 3 parts by weight of Exxsol D80 (product name) (manufactured by Exxon Mobil Corporation) as a diluent by the use of a dissolver.

### Preparation Example 2 (Preparation of PVC Paste Sol for Foam Layer)

A PVC paste sol for foam layer was prepared by kneading 100 parts by weight of paste PVC (R310 (product name) manufactured by Tosoh Corporation; polymerization degree 1,100) with 50 parts by weight of calcium carbonate (NN#500 (product name) manufactured by Nitto Funka Kogyo K.K.), 100 parts by weight of DINP (manufactured by J-PLUS Co., Ltd.) as a plasticizer, 5 parts by weight of AZ ULTRA 1050 (product name) (manufactured by Otsuka Chemical Co., Ltd.) as a foaming agent, 4 parts by weight of titanium oxide (JR600A (product name) manufactured by TAYCA Co., Ltd.) and 1.6 parts by weight of FL103N (product name) manufactured by ADEKA Corporation) as a stabilizer by the use of a dissolver.

### Preparation Example 3 (Preparation of PVC Paste Sol for Adhesive Layer)

A PVC paste sol for adhesive layer was prepared by kneading 100 parts by weight of paste PVC (G50 (product name) manufactured by Tosoh Corporation; polymerization degree 1,900) with 63 parts by weight of DINP (manufactured by J-PLUS Co., Ltd.) as a plasticizer, 2 parts by weight of a Ca-Zn composite heat stabilizer (SC-320 (product name) manufactured by ADEKA Corporation) and 2 parts by weight of Exxsol D80 (product name) (manufactured by Exxon Mobil Corporation) as a diluent by the use of a dissolver.

### Preparation Example 4 (Preparation 2 of PVC Paste Sol for Skin Layer)

A PVC paste sol for skin layer was prepared by kneading 100 parts by weight of paste PVC (EX810E (product name) manufactured by Tosoh Corporation; polymerization degree: 1,650) with 70 parts by weight of DINP (manufactured by J-PLUS Co., Ltd.) as a plasticizer, 2 parts by weight of a Ca-Zn composite heat stabilizer (SC-320 (product name) manufactured by ADEKA Corporation) and 3 parts by weight of Exxsol D80 (product name) (manufactured by Exxon Mobil Corporation) as a diluent by the use of a dissolver.

### Preparation Example 5 (Preparation 2 of PVC Paste Sol for Foam Layer)

A PVC paste sol for foam layer was prepared by kneading 100 parts by weight of paste PVC (G50 (product name) manufactured by Tosoh Corporation; polymerization degree 1,900) with 50 parts by weight of calcium carbonate (NN#500 (product name) manufactured by Nitto Funka Kogyo K.K.), 100 parts by weight of DINP (manufactured by J-PLUS Co., Ltd.), 5 parts by weight of AZ ULTRA 1050 (product name) (manufactured by Otsuka Chemical Co., Ltd.) as a foaming agent, 4 parts by weight of titanium oxide (JR600A (product name) manufactured by TAYCA Co., Ltd.) and 1.6 parts by weight of FL103N (product name) (manufactured by ADEKA Corporation) as a stabilizer by the use of a dissolver.

### Preparation Example 6 (Preparation 2 of PVC Paste Sol for Adhesive Layer)

A PVC paste sol for adhesive layer was prepared by kneading 100 parts by weight of paste PVC (R750 (product name) manufactured by Tosoh Corporation; polymerization degree 1,250) with 63 parts by weight of DINP (manufactured by J-PLUS Co., Ltd.), 2 parts by weight of a Ca-Zn composite heat stabilizer (SC-320 (product name) manufactured by ADEKA Corporation) and 2 parts by weight of Exxsol D80 (product name) (manufactured by Exxon Mobil Corporation) by the use of a dissolver.

### Preparation Example 7 (Preparation of Sheet for Skin Layer)

In a plastic bag, 100 parts by weight of general-purpose PVC (TH-1700 (product name) manufactured by Taiyo Vinyl Corporation; polymerization degree 1,700), 80 parts by weight of DOP (manufactured by J-PLUS Co., Ltd.) as a plasticizer and 4 parts by weight of a Ca-Zn composite heat stabilizer (SC-308E (product name) manufactured by ADEKA Corporation) and mixed uniformly by hand. The resulting mixture was kneaded in a roll forming machine controlled to 150°C for 6 minutes and formed into a PVC sheet for skin layer with a thickness of 0.3 mm.

### Example 1

Onto a releasable paper preheated at 180°C for 5 seconds, a coating of the PVC paste sol for skin layer prepared in Preparation Example 1 was applied at a thickness of 0.2 mm. The resulting coated paper was heated at 180°C for 60 seconds to obtain a raw material 1. A coating of the PVC paste sol for adhesive layer prepared in Preparation Example 3 was applied at a thickness of 0.2 mm onto the raw material 1, and then, a polyvinyl chloride fabric (POLYTERON (product name) manufactured by Teiken Limited) as a fabric substrate was laminated onto the adhesive layer side. The resulting laminate was heated at 110°C for 60 seconds to perform gelation of the applied sols, after which the releasable paper was peeled off. The thus-obtained laminate was in the form of synthetic leather with excellent flexibility and durability.

The evaluation results of the obtained synthetic leather are shown in Table 1. The obtained synthetic leather was mono-materialized and was excellent in material recyclability.

### Example 2

A laminate was obtained in the same manner as in Example 1 except that: after obtaining the raw material 1, a coating of the PVC paste sol for foam layer prepared in Preparation Example 2 was applied at a thickness of 0.2 mm onto the raw material 1, followed by gelation and foaming by heating at 200°C for 90 seconds to obtain a raw material 2 and then forming the adhesive layer with a thickness of 0.2 mm. The thus-obtained laminate was in the form of synthetic leather having a closed cell foam layer to also achieve excellent touch and flexural fatigue resistance.

The obtained synthetic leather was mono-materialized and was excellent in material recyclability.

### Comparative Example 1

A laminate was obtained in the same manner as in Example 1 except that a double-knit fabric ((material) PET/rayon, manufactured by Hattori Takeshi Co., Ltd.) was laminated as the fabric substrate in place of the polyvinyl chloride fabric (POLYTERON (product name) manufactured by Teiken Limited).

The obtained laminate was low in recyclability due to the presence of PET and rayon as non-uniform foreign matter when processed into the kneaded material.

**[Table 1]**

| | | Example 1 | Example 2 | Comparative Example 1 |
|---|---|---|---|---|
| Layer Configuration | Skin Layer | PVC | PVC | PVC |
| | Foam Layer | - | PVC | - |
| | Adhesive Layer | PVC | PVC | PVC |
| | Fabric Substrate | PVC | PVC | PET/Rayon |
| Materials for Layer Configuration | | Mono-materialized | Mono-materialized | Composite materials |
| Kneadability | | ○ | ○ | × |

### Example 3

Onto a releasable paper preheated at 180°C for 5 seconds, a coating of the PVC paste sol for skin layer prepared in Preparation Example 4 was applied at a thickness of 0.2 mm. The resulting coated paper was heated at 180°C for 60 seconds to obtain a raw material 3. A coating of the PVC paste sol for adhesive layer prepared in Preparation Example 3 was applied at a thickness of 0.2 mm onto the raw material 3, and then, a polyvinyl chloride fabric (POLYTERON (product name) manufactured by Teiken Limited) was laminated as a fabric substrate on the adhesive layer side. The resulting laminate was heated at 110°C for 60 seconds to perform gelation of the applied sols, after which the releasable paper was peeled off. The thus-obtained laminate was in the form of synthetic leather with excellent flexibility, durability and frame retardancy.

The evaluation results of the obtained synthetic leather are shown in Table 2. The obtained synthetic leather was mono-materialized and was excellent in material recyclability.

### Example 4

A laminate was obtained in the same manner as in Example 1 except that: after obtaining the raw material 1, a coating of the PVC paste sol for foam layer prepared in Preparation Example 5 was applied at a thickness of 0.2 mm onto the raw material 1, followed by gelation and foaming by heating at 200°C for 90 seconds to obtain a raw material 4 and then forming the adhesive layer with a thickness of 0.2 mm. The thus-obtained laminate was in the form of synthetic leather having a closed cell foam layer to also achieve excellent touch and flexural fatigue resistance.

The evaluation results of the obtained synthetic leather are shown in Table 2. The obtained synthetic leather was mono-materialized and was excellent in material recyclability.

### Example 5

Synthetic leather was obtained in the same manner as in Example 1 except that the PVC paste sol for adhesive layer prepared in Preparation Example 6 was used in place of the PVC paste sol for adhesive layer prepared in Preparation Example 3.

The evaluation results of the obtained synthetic leather are shown in Table 2. The obtained synthetic leather was mono-materialized and was excellent in material recyclability.

### Example 6

Synthetic leather was obtained by using a polyvinyl chloride fabric (POLYTERON (product name) manufactured by Teiken Limited) as a fabric substrate, applying the PVC paste sol for adhesive layer prepared in Preparation Example 3 at a thickness of 0.2 mm onto the fabric substate, placing the PVC sheet for skin layer prepared in Preparation Example 7 on the adhesive layer side and thermocompression bonding the resulting laminate at 110°C and 4 kg/cm² for 60 seconds.

The evaluation results of the obtained synthetic leather are shown in Table 2. The obtained synthetic leather was mono-materialized and was excellent in material recyclability.

### Example 7

The flame retardancy of the synthetic leather obtained in Example 1 was evaluated. The evaluation result is shown in Table 2.

### Example 8

The flame retardancy of the synthetic leather obtained in Example 2 was evaluated. The evaluation result is shown in Table 2.

### Comparative Example 2

The flame retardancy of the synthetic leather obtained in Comparative Example 1 was evaluated. The evaluation result is shown in Table 2.

**[Table 2]**

| | | Example 3 | Example 4 | Example 5 | Example 6 |
|---|---|---|---|---|---|
| Layer Configuration | Skin Layer | PVC | PVC | PVC | PVC |
| | Foam Layer | - | PVC | - | - |
| | Adhesive Layer | PVC | PVC | PVC | PVC |
| | Fabric Substrate | PVC | PVC | PVC | PVC |
| Materials for Layer Configuration | | Mono-materialized | Mono-materialized | Mono-materialized | Mono-materialized |
| Vinyl Acetate Content [%] in Skin Layer | | 0 | 9 | 9 | 0 |
| PVC Polymerization Degree in Skin Layer | | 1650 | 1900 | 1900 | **1700** |
| Plasticizer Content [parts by weight] in Skin Layer | | 70 | 70 | 70 | 80 |
| Stabilizer Content [parts by weight] in Skin Layer | | 2 | 2 | 2 | 4 |
| Vinyl Acetate Content [%] in Foam Layer | | - | 9 | - | - |
| PVC Polymerization Degree in Foam Layer | | - | 1900 | - | - |
| Plasticizer Content [parts by weight] in Foam Layer | | - | 100 | - | - |
| Vinyl Acetate Content [%] in Adhesive Layer | | 9 | 9 | 5 | 9 |
| Polymerization Degree in Adhesive Layer | | 1900 | 1900 | 1250 | 1900 |
| Plasticizer Content [parts by weight] in Adhesive Layer | | 63 | 63 | 63 | 63 |
| Stabilizer Content [parts by weight] in Adhesive Layer | | 2 | 2 | 2 | 2 |
| Kneadability | | ○ | ○ | ○ | ○ |
| Flame Retardancy | | ○ | ○ | ○ | ○ |

**[Table 2] (continued)**

| | | Example 7 | Example 8 | Comparative Example 2 |
|---|---|---|---|---|
| Layer Configuration | Skin Layer | PVC | PVC | PVC |
| | Foam Layer | - | PVC | - |
| | Adhesive Layer | PVC | PVC | PVC |
| | Fabric Substrate | PVC | PVC | PET/Rayon |
| Materials for Layer Configuration | | Mono-materialized | Mono-materialized | Composite materials |
| Vinyl Acetate Content [%] in Skin Layer | | 9 | 9 | 9 |
| PVC Polymerization Degree in Skin Layer | | 1900 | 1900 | 1900 |
| Plasticizer Content [parts by weight] in Skin Layer | | 70 | 70 | 70 |
| Stabilizer Content [parts by weight] in Skin Layer | | 2 | 2 | 2 |
| Vinyl Acetate Content [%] in Foam Layer | | - | 0 | - |
| PVC Polymerization Degree in Foam Layer | | - | 1100 | - |
| Plasticizer Content [parts by weight] in Foam Layer | | - | 100 | - |
| Vinyl Acetate Content [%] in Adhesive Layer | | 9 | 9 | 9 |
| Polymerization Degree in Adhesive Layer | | 1900 | 1900 | 1900 |
| Plasticizer Content [parts by weight] in Adhesive Layer | | 63 | 63 | 63 |
| Stabilizer Content [parts by weight] in Adhesive Layer | | 2 | 2 | 2 |
| Kneadability | | | | |
| Flame Retardancy | | ○ | ○ | × |

### Example 9

The synthetic leather obtained in Example 1 was fed and crushed as it was in a cryogenic sample crusher (JFC-5000 (product name) manufactured by Japan Analytical Industry Co., Ltd.) to obtain a fine synthetic leather powder. In a press machine, the fine synthetic leather powder was preheated at 175°C under a pressure of 1 MPa for 5 minutes and pressed at 175°C under a pressure of 20 MPa for 3 minutes. With this, a recycled material sheet was obtained. Physical property evaluation was performed on the obtained recycled material sheet.

The obtained recycled material sheet had a strength of 25 MPa and an elongation of 238%. Further, the recycling efficiency evaluation result of the synthetic leather obtained in Example 1 was 145 m²/day. Thus, the synthetic leather used was excellent in material recyclability. The evaluation results are shown in Table 3.

### Example 10

Recycled material sheet production and recycling efficiency evaluation were carried out in the same manner as in Example 9 except that the synthetic leather obtained in Example 2 was used.

The obtained recycled material sheet had a strength of 30 MPa and an elongation of 253%. Further, the recycling efficiency evaluation result was 150 m²/day. Thus, the synthetic leather used was excellent in material recyclability. The evaluation results are shown in Table 3.

### Example 11

Recycled material sheet production and recycling efficiency evaluation were carried out in the same manner as in Example 9 except that the synthetic leather obtained in Example 3 was used.

The obtained recycled material sheet had a strength of 24 MPa and an elongation of 230%. Further, the recycling efficiency evaluation result was 140 m²/day. Thus, the synthetic leather used was excellent in material recyclability. The evaluation results are shown in Table 3.

### Example 12

Recycled material sheet production and recycling efficiency evaluation were caried out in the same manner as in Example 9 except that the synthetic leather obtained in Example 4 was used.

The obtained recycled material sheet had a strength of 28 MPa and an elongation of 260%. Further, the recycling efficiency evaluation result was 148 m²/day. Thus, the synthetic leather used was excellent in material recyclability. The evaluation results are shown in Table 3.

### Example 13

Recycled material sheet production and recycling efficiency evaluation were carried out in the same manner as in Example 9 except that the synthetic leather obtained in Example 5 was used.

The obtained recycled material sheet had a strength of 24 MPa and an elongation of 234%. Further, the recycled efficiency evaluation result was 137 m²/day. Thus, the synthetic leather used was excellent in material recyclability. The evaluation results are shown in Table 3.

### Example 14

Recycled material sheet production and recycling efficiency evaluation were carried out in the same manner as in Example 9 except that the synthetic leather obtained in Example 6 was used.

The obtained recycled material sheet had a strength of 23 MPa and an elongation of 227%. Further, the recycling efficiency evaluation result was 140 m²/day. Thus, the synthetic leather used was excellent in material recyclability. The evaluation results are shown in Table 3.

### Comparative Example 3

A recycled material sheet was obtained and evaluated in the same manner as in Example 9 except that the laminate obtained in Comparative Example 1 was used.

The obtained recycled material sheet had a low strength of 5 MPa and a low elongation of 85%. It was not possible to carry out recycling efficiency evaluation because the fabric substrate was unremovable from the laminate. The evaluation results are shown in Table 3.

### Comparative Example 4

A laminate was obtained in the same manner as in Example 2 except that a double-knit fabric (PET/rayon (material), manufactured by Hattori Takeshi Co., Ltd.) was laminated as the fabric substrate in place of the polyvinyl chloride fabric (POLYTERON (product name) manufactured by Teiken Limited).

The recyclability of the obtained laminate was evaluated to be low due to the presence of PET and rayon as non-uniform foreign matter in the kneaded material.

Further, recycled sheet production and recycling efficiency evaluation were carried out in the same manner as in Example 9 except that the above-obtained laminate was used.

The obtained recycled sheet had a low strength of 7 MPa and a low elongation of 90%. It took time to peel off the fabric substrate, resulting in a low recycling efficiency of 96 m²/day. The evaluation results are shown in Table 3.

### Comparative Example 5

A laminate was obtained in the same manner as in Example 3 except that a double-knit fabric (PET/rayon (material), manufactured by Hattori Takeshi Co., Ltd.) was laminated as the fabric substrate in place of the polyvinyl chloride fabric (POLYTERON (product name) manufactured by Teiken Limited).

The recyclability of the obtained laminate was evaluated to be low due to the presence of PET and rayon as non-uniform foreign matter in the kneaded material.

Further, recycled sheet production and recycling efficiency evaluation were carried out in the same manner as in Example 9 except that the above-obtained laminate was used.

The obtained recycled sheet had a low strength of 6 MPa and a low elongation of 80%. It was possible to carry out recycling efficiency evaluation because the fabric substrate was unremovable from the laminate. The evaluation results are shown in Table 3.

**[Table 3]**

| | | Example 9 | Example 10 | Example 11 | Example 12 | Example 13 | Example 14 |
|---|---|---|---|---|---|---|---|
| Layer Configuration | Skin Layer | PVC | PVC | PVC | PVC | PVC | PVC |
| | Foam Layer | - | PVC | - | PVC | - | - |
| | Adhesive Layer | PVC | PVC | PVC | PVC | PVC | PVC |
| | Fabric Substrate | PVC | PVC | PVC | PVC | PVC | PVC |
| Materials for Layer Configuration | | Mono-materialized | Mono-materialized | Mono-materialized | Mono-materialized | Mono-materialized | Mono-materialized |
| Vinyl Acetate Content [%] in Skin Layer | | 9 | 9 | 0 | 9 | 9 | 0 |
| PVC Polymerization Degree in Skin Layer | | 1900 | 1900 | 1650 | 1900 | 1900 | 1700 |
| Plasticizer Content [parts by weight] in Skin Layer | | 70 | 70 | 70 | 70 | 70 | 80 |
| Stabilizer Content [parts by weight] in Skin Layer | | 2 | 2 | 2 | 2 | 2 | 4 |
| Vinyl Acetate Content [%] in Foam Layer | | - | 0 | - | 9 | - | - |
| PVC Polymerization Degree in Foam Layer | | - | 1100 | - | 1900 | - | - |
| Plasticizer Content [parts by weight] in Foam Layer | | - | 100 | - | 100 | - | - |
| Vinyl Acetate Content [%] in Adhesive Layer | | 9 | 9 | 9 | 9 | 5 | 9 |
| Polymerization Degree in Adhesive Layer | | 1900 | 1900 | 1900 | 1900 | 1250 | 1900 |
| Plasticizer Content [parts by weight] in Adhesive Layer | | 63 | 63 | 63 | 63 | 63 | 63 |
| Stabilizer Content [parts by weight] in Adhesive Layer | | 2 | 2 | 2 | 2 | 2 | 2 |
| Kneadability | | | | | | | |
| Flame Retardancy | | | | | | | |
| Strength [MPa] of Recycled Sheet | | 25 | 30 | 24 | 28 | 24 | 23 |
| Elongation [%] of Recycled Sheet | | 238 | 253 | 230 | 260 | 234 | 227 |
| Amount [m²/day] of Recycling Per Unit Time | | 145 | 150 | 140 | 148 | 137 | 140 |

**[Table 3] (continued)**

| | | Comparative Example 3 | Comparative Example 4 | Comparative Example 5 |
|---|---|---|---|---|
| Layer Configuration | Skin Layer | PVC | PVC | PVC |
| | Foam Layer | - | PVC | - |
| | Adhesive Layer | PVC | PVC | PVC |
| | Fabric Substrate | PET/Rayon | PET/Rayon | PET/Rayon |
| Materials for Layer Configuration | | Composite materials | Composite materials | Composite materials |
| Vinyl Acetate Content [%] in Skin Layer | | 9 | 9 | 0 |
| PVC Polymerization Degree in Skin Layer | | 1900 | 1900 | 1650 |
| Plasticizer Content [parts by weight] in Skin Layer | | 70 | 70 | 70 |
| Stabilizer Content [parts by weight] in Skin Layer | | 2 | 2 | 2 |
| Vinyl Acetate Content [%] in Foam Layer | | - | 0 | - |
| PVC Polymerization Degree in Foam Layer | | - | 1100 | - |
| Plasticizer Content [parts by weight] in Foam Layer | | - | 100 | - |
| Vinyl Acetate Content [%] in Adhesive Layer | | 9 | 9 | 9 |
| Polymerization Degree in Adhesive Layer | | 1900 | 1900 | 1900 |
| Plasticizer Content [parts by weight] in Adhesive Layer | | 63 | 63 | 63 |
| Stabilizer Content [parts by weight] in Adhesive Layer | | 2 | 2 | 2 |
| Kneadability | | | × | × |
| Flame Retardancy | | | × | × |
| Strength [MPa] of Recycled Sheet | | 5 | 7 | 6 |
| Elongation [%] of Recycled Sheet | | 85 | 90 | 80 |
| Amount [m²/day] of Recycling Per Unit Time | | Fabric Substrate Unremovable | 96 | Fabric Substrate Unremovable |

The entire disclosures of Japanese Patent Application No. 2023-112743 filed on July 10, 2023 and Japanese Patent Application No. 2023-207443 filed on December 8, 2023, including claims, specifications and summaries, are incorporated herein by reference in their entireties.

### INDUSTRIAL APPLICABILITY

The laminate of the present invention and synthetic leather obtained therefrom, both of which are excellent in material recyclability, are expected to find applications in a wide range of fields including automotive interiors, furniture, bags and pouches, footwear, clothing and stationery, and are high in industrial value.

## Claims

1. A laminate comprising a skin layer, a fabric substrate and at least an adhesive layer between the skin layer and the fabric substrate, wherein each of the skin layer, the adhesive layer and the fabric substrate is made of a vinyl chloride resin.

2. The laminate according to Claim 1, comprising at least a foam layer between the skin layer and the adhesive layer, wherein the foam layer is made of a vinyl chloride resin.

3. The laminate according to Claim 1 or 2, wherein the skin layer and the adhesive layer are respectively made of vinyl chloride resins for paste processing.

4. The laminate according to Claim 1 or 2, wherein the fabric substrate is a woven fabric made of a vinyl chloride resin.

5. The laminate according to Claim 1 or 2, wherein each of the skin layer and the adhesive layer contains at least 40 to 100 parts by weight of a plasticizer and 1 to 5 parts by weight of a stabilizer per 100 parts by weight of the vinyl chloride resin.

6. The laminate according to Claim 1 or 2, wherein each of the skin layer and the adhesive layer is made of a vinyl chloride resin having a polymerization degree of 700 to 5,000.

7. The laminate according to Claim 1 or 2, wherein the adhesive layer is made of a vinyl chloride-vinyl acetate copolymer resin.

8. Synthetic leather comprising the laminate as defined in Claim 1 or 2.

9. A method for producing the laminate as defined in Claim 1 or 2, comprising: applying a polyvinyl chloride paste sol as the adhesive layer between the fabric substrate made of a vinyl chloride resin and the skin layer made of a vinyl chloride resin or between the fabric substrate made of a vinyl chloride resin and the foam layer made of a vinyl chloride resin; and heat-bonding the fabric substrate, the adhesive layer and the skin layer, or the fabric substrate, the adhesive layer and the foam layer, at 50°C to 230°C to form a laminate.
